# EUROPÄISCHE PATENTSCHRIFT

(11) **EP 1 889 818 B1**
(45) Veröffentlichungstag und Bekanntmachung des Hinweises auf die Patenterteilung: **01.12.2010**
(21) Anmeldenummer: 06016515.6
(22) Anmeldetag: 08.08.2006
(51) Int. Cl.: C03C 17/36, C03C 17/34

(54) **Temperbares Low-e-Schichtsystem; Verfahren zur Herstellung und Low-e-Glasprodukt mit Schichtsystem**
Temperable low-e coating system; method for producing the same and a low-e glass product comprising said coating system
Système de couches bas-emissif trempable: procédé pour réaliser ce système de couches et produit de verre bas-emissif comprenant ce système de couches.

(43) Veröffentlichungstag der Anmeldung: 20.02.2008
(73) Patentinhaber: Scheuten Glasgroep, 5900 AA Venlo (NL); Semcoglas Glastechnik GmbH, 17034 Neubrandenburg (DE)
(72) Erfinder: Villari, Valentino, Dr., 41063 Mönchengladbach (DE); Nickol, Friedrich Wilhelm, 57567 Daaden (DE)
(74) Vertreter: Jostarndt, Hans-Dieter

(56) Entgegenhaltungen:
- EP-A- 1 538 131
- EP-B1- 1 007 756
- US-A- 5 183 700

## Beschreibung

Die Erfindung betrifft ein temperbares Low-e-Schichtsystem, das auf ein-Substrat aufbringbar ist und das einen Schichtaufbau mit wenigstens einer im IR-Bereich reflektierenden Reflexionsschicht aufweist.

Die Erfindung betrifft ferner ein Verfahren zur Herstellung eines temperbaren Low-e-Schichtsystems und ein damit hergestelltes Low-e-Glasprodukt.

Beschichtete Substrate finden in diversen Technologiebereichen Anwendung. Die verwendeten Schichtsysteme dienen dazu, die optischen, chemischen und/oder mechanischen Eigenschaften von Substraten zu verbessern.

Die Erfindung bezieht sich insbesondere auf transparente Substrate, die mit einem wenigstens teilweise lichtdurchlässigen Schichtsystem versehen sind. Bei den transparenten Substraten kann es sich beispielsweise um Scheiben aus Kunststoff oder Glas handeln.

Bei der Beschichtung von transparenten Substraten ist es bekannt, durch geeignete Auswahl von Mehrfachschichten ein Schichtsystem mit geringer Emissivität und gewünschten Transmissions- oder Reflektionswerten des beschichteten Substrats zu erzielen. Derartige Schichtsysteme und Glasprodukte werden mit dem Begriff "Low-E" bezeichnet, wodurch die angestrebte niedrige Emissivität des Produktes ausgedrückt wird.

Werden Low-e-Schichtsysteme beispielsweise für Isolierverglasungen genutzt, lässt sich hierdurch der U-Wert von mit derartigen Verglasungen versehenen Räumen vermindern. Die Lichtdurchlässigkeit soll dabei in beiden Richtungen nur wenig behindert werden, so dass eine hohe Lichttransmission angestrebt wird. Ferner soll die Reflexionsfarbe der Verglasung möglichst in einem großen Bereich einstellbar, bevorzugt aber farbneutral sein.

Zur Erzielung der gewünschten optischen Eigenschaften wird in einem Low-e-Schichtsystem üblicherweise wenigstens eine Funktionsschicht aus einem im IR-Bereich reflektierenden Material eingesetzt. Dabei kommt insbesondere Silber zur Anwendung. Die Silberschicht wird üblicherweise ergänzt durch weitere Funktionsschichten, welche die Transmissions- und Reflexionseigenschaften des gesamten Schichtsystems beeinflussen. Das Gesamtschichtsystem ist dabei so konzipiert, dass die Durchlässigkeit für die meisten Strahlen im sichtbaren Bereich des Spektrums gegeben ist, während der größte Teil der Infrarotstrahlung reflektiert wird.

Bei der Herstellung von Glasprodukten mit solchen Schichtsystemen ist insbesondere die Silberschicht gegen unerwünschte Einflüsse zu schützen, die durch die Herstellung oder Weiterverarbeitung des Schichtsystems hervorgerufen werden können. In zunehmendem Maße ist es beispielsweise erforderlich, Low-e-Schichtsysteme thermisch zu behandeln. Diese Vorspannung erhöht die Biegefestigkeit der Glasscheibe und verleiht ihr bestimmte Sicherheitseigenschaften. Bei der Herstellung und Weiterverarbeitung von Low-e-Glasprodukten besteht jedoch das Problem, dass sich ein gebildeter Schichtaufbau durch verschiedene physikalische und/oder chemische Vorgänge verändert, was zu einer Veränderung der optischen und thermischen Eigenschaften des Schichtsystems führt.

Beim Tempern von Low-e-Schichtsystemen wird das System beispielsweise in einer bestimmten Atmosphäre erhitzt, wobei eine Diffusion von Sauerstoff in den Schichtaufbau erfolgen kann, was zu einer Oxidation der Silberschicht führt. Der Sauerstoff kann beispielsweise aus der Atmosphäre über die Oberfläche des Schichtsystems oder aus anderen Bereichen des Systems in den Schichtaufbau und damit in die Silberschicht diffundieren. Ferner können Natriumionen oder andere Fremdatome beispielsweise aus dem Glassubstrat in den Schichtaufbau und damit ebenfalls in die Silberschicht eindringen.

Derartige Diffusionsvorgänge führen zu einer Veränderung der Reflexionsfarbe des Schichtaufbaus, da sich dadurch insbesondere die optischen und elektrischen Eigenschaften der eingesetzten Silberschicht verändern. Darüber hinaus verursacht auch die Veränderung der Kristallstruktur der Silberschicht eine Farbveränderung, den so genannten Farbshift. Ein Schichtaufbau mit einer Silberschicht hat somit vor einem Temperprozess eine andere Farbe als nach dem Temperprozess, und dieser Farbshift ist bei der Produktion und Weiterverarbeitung von Low-e Gläsern zu berücksichtigen.

Dabei ist es bekannt, den auftretenden Farbshift auszugleichen, indem ein Schichtsystem so ausgebildet wird, dass es vor dem Tempern einen bestimmten Grad an Färbung aufweist. Der Grad der Färbung wird so eingestellt, dass sich durch den Farbshift beim anschließenden Temperprozess ein farbneutrales Glasprodukt ergibt. Derartige Verfahren haben jedoch den Nachteil, dass der Temperprozess in Öfen mit spezifischen Parametern durchgeführt werden muss, da sonst die durchgehende Farbneutralität des Endproduktes nicht verlässlich und reproduzierbar erreicht werden kann. Veränderungen der erforderlichen Parameter beispielsweise über die Fläche eines Glasproduktes führen zu Abweichungen von der Farbneutralität, wodurch ein hergestellter Schichtaufbau für die Verwendung im Glasbau unbrauchbar wird.

Die deutsche Patentschrift DE 198 52 358 C1 schlägt zur Erreichung der gewünschten optischen Eigenschaften eines Low-e-Schichtsystems beispielsweise vor, das über der Silberschicht eine Al-Legierung, ein Metalloxid wie SnO₂ Bi₂O₃, TiO₂ oder ZnO und ein ZnO-haltiges Mischoxid mit Spinellstruktur als Oberblocker aufweist. Unterhalb der Silberschicht befindet sich ebenfalls ein Metalloxid aus der genannten Gruppe, ZnO oder Zn.

Aus der deutschen Patentschrift DE 197 19 543 C1 ist ferner ein thermisch belastbares Low-e-Schichtsystem bekannt, das eine untere und eine obere Entspiegelungsschicht aus einer oder mehreren Metall- oder Halbleiterverbindungen, eine Funktionsschicht aus Silber und unmittelbar unter der Silberschicht eine Schicht aus mit Al und Si dotiertem Zinkoxid aufweist, wobei diese Schicht durch reaktive Kathodenzerstäubung aus einem metallischen Target aus einer Zn-A1-Si-Legierung hergestellt wurde.

Die europäische Patentanmeldung EP 1 538 131 A1 offenbart dazu beispielsweise ein temperbares Schichtsystem mit einer Silberschicht und mehreren Funktionsschichten, bei denen es sich wenigstens um zwei Entspiegelungsschichten handelt, die jeweils unterhalb und oberhalb der Silberschicht angeordnet sind. Der Brechungsindex der von der Silberschicht aus gesehen dem Substrat zugewandten Entspiegelungsschicht ist dabei höher als der Brechungsindex der von der Silberschicht aus gesehen dem Substrat abgewandten Entspiegelungsschicht. Das Schichtsystem umfasst ferner verschiedene Blockerschichten und zwei Diffusionssperrschichten, von denen eine unmittelbar auf dem Substrat und eine zwischen der unteren Entspiegelungsschicht und der Silberschicht angeordnet ist. Bei den Entspiegelungsschichten handelt es sich vorzugsweise um Titanoxidschichten.

Ferner offenbart die europäische Patentschrift EP 1 007 756 B1 Beschichtungen mit einer Silberschicht und inneren und einer äußeren Entspiegelungsschichten, wobei die innere Entspiegelungsschicht eine mehrlagige Schicht ist, die aus einer durch Mittelfrequenzsputtern aufgebrachten Titanoxidschicht und einer Zinkoxidschicht zwischen der Titanoxidschicht und einer Silberschicht besteht. Dabei kann es sich bei der Titanoxidschicht auch um eine Schicht aus Titanoxinitrid handeln.

Aufgabe der Erfindung ist es, ein verbessertes temperbares Low-e-Schichtsystem aufbringbar auf ein Substrat bereitzustellen, das nach einem Temperprozess eine geringe Emissivität und eine hohe Lichttransmission aufweist, wobei der Schichtaufbau nach dem Temperprozess farbneutral ist und einen niedrigen Flächenwiderstand R aufweist. Insbesondere soll das Schichtsystem in einem weiten, für das Härten von Glas relevanten, Temperaturbereich eine hohe Konstanz bezüglich seiner Eigenschaften aufweisen. Damit soll erreicht werden, dass auch bei unterschiedlichen Ofenparametern reproduzierbare Schichteigenschaften erzielt werden.

Aufgabe der Erfindung ist es ferner, ein Verfahren zur Herstellung eines solchen Schichtsystems und zur Verwendung für ein Low-e-Glasprodukt bereitzustellen.

Erfindungsgemäß wird diese Aufgabe durch ein temperbares Low-e-Schichtsystem mit den Merkmalen des unabhängigen Anspruches 1 gelöst. Vorteilhafte Weiterbildungen des Schichtsystems ergeben sich aus den Unteransprüchen 2-4. Die Aufgabe wird ferner durch ein Verfahren nach Anspruch 5 gelöst. Vorteilhafte Ausführungsformen des Verfahrens ergeben sich aus den Unteransprüchen 6-11. Die Aufgabe wird ferner durch ein Low-e-Glasprodukt gemäß dem Anspruch 12 mit den vorteilhaften Ausführungsformen aus den Ansprüchen 13-14 gelöst.

Die Erfindung umfasst ein temperbares Low-e-Schichtsystem, das auf ein transparentes Substrat aufbringbar ist, das wenigstens eine Reflexionsschicht im IR-Bereich aufweist. Bei der Reflexionsschicht handelt es sich vorzugsweise um eine Schicht aus Silber. Ausgehend vom Substrat sind auf dem Substrat wenigstens eine untere Diffusionssperrschicht aus ZnSnOₓ, eine Entspiegelungsschicht aus Titanoxinitrid, eine innere Diffusionssperrschicht aus SnO₂ oder ZnSnOₓ, eine Keimschicht aus ZnAlOₓ, eine Reflexionsschicht im IR-Bereich, eine Blockerschicht aus ZnAlOₓ und eine Oberschicht aus ZnSnOₓ angeordnet.

Dabei bestehen die untere Diffusionssperrschicht und die Oberschicht erfindungsgemäß aus einem Zinkstannat, in dem Zink und Zinn jeweils in Anteilen enthalten sind, die in der Größenordnung von 47-53 Gew.-% liegen. In einem besonders bevorzugten Ausführungsbeispiel der Erfindung bestehen die untere Diffusionssperrschicht und die Oberschicht aus einem Zinkstannat, in dem 52,42 Gew.-% Zink und 47,58 Gew.-% Zinn enthalten sind.

Die Dicken der einzelnen Schichten liegen vorzugsweise in den folgenden Größenordnungen:

| | |
|---|---|
| Untere Diffusionssperrschicht: | 2-10 nm, vorzugsweise 5 nm |
| Entspiegelungsschicht: | 10-20 nm, vorzugsweise 15 nm |
| Innere Diffusionssperrschicht: | 2-10 nm, vorzugsweise 5 nm |
| Keimschicht: | 2-10 nm, vorzugsweise 5 nm |
| Reflexionsschicht: | 5-20 nm, vorzugsweise 12 nm |
| Blockerschicht: | 2-10 nm, vorzugsweise 4 nm |
| Oberschicht: | 20-55 nm, vorzugsweise 35 nm |

Die Erfindung umfasst ferner ein Verfahren zur Herstellung eines temperbaren Low-e-Schichtsystems auf einem transparenten Substrat, bei dem auf ein bereitgestelltes Substrat eine untere Diffusionssperrschicht aus ZnSnOₓ aufgebracht wird, wobei diese untere Diffusionssperrschicht aus einem Zinkstannat besteht, in dem Zink und Zinn jeweils in Anteilen enthalten sind, die in der Größenordnung von 47-53 Gew.-% liegen. Darauf folgt das Aufbringen einer Entspiegelungsschicht aus Titanoxinitrid und einer inneren Diffusionssperrschicht aus SnO₂ oder ZnSnOₓ. Ferner wird eine Keimschicht aus ZnAlOₓ aufgebracht. Auf die Keimschicht wird eine Reflexionsschicht im IR-Bereich aufgebracht, die vorzugsweise aus Silber besteht. Auf die Silberschicht werden eine Blockerschicht ZnAlOₓ und eine Oberschicht aus ZnSnOₓ aufgebracht. Die Oberschicht besteht ebenfalls aus einem Zinkstannat, in dem Zink und Zinn jeweils in Anteilen enthalten sind, die in der Größenordnung von 47-53 Gew.-% liegen.

Die Entspiegelungsschicht wird vorzugsweise durch reaktives Sputtern von einem oder mehreren Titantargets in einer Beschichtungsatmosphäre aus einem Gasgemisch aus Argon, Sauerstoff und Stickstoff erzeugt. Dabei liegt das Mischungsverhältnis von Ar:O₂:N₂ in der Beschichtungsatmosphäre bei etwa 70:20:10. Die Keimschicht und die Blockerschicht werden vorzugsweise durch keramisches Sputtern von einem keramischen Zink-Aluminium-Target (ZAO-Target) erzeugt.

Die untere Diffusionssperrschicht und die Oberschicht werden vorzugsweise durch reaktives Sputtern von einem oder mehreren Zinn- und Zinnlegierungstargets abgeschieden, wobei die Anteile von Zink und Zinn im Target jeweils in der Größenordnung von 47-53 Gew.-% liegen. In einem besonders bevorzugten Ausführungsbeispiel der Erfindung enthält das dazu verwendete Target 52,42 Gew.-% Zink und 47,58 Gew.-% Zinn.

In einem weiteren besonders bevorzugten Ausführungsbeispiel der Erfindung werden die einzelnen Schichten bei dem erfindungsgemäßen Verfahren mit den oben aufgeführten Schichtdicken aufgebracht.

Von der Erfindung ist ferner ein Low-e-Glasprodukt umfasst, das mit dem erfindungsgemäßen Verfahren hergestellt wurde und ein Low-e-Glasprodukt mit dem beschriebenen Schichtsystem auf einem Substrat. Das Schichtsystem auf einem transparenten Substrat kann zu einem Glasprodukt getempert werden, welches die angestrebten Eigenschaften ausweist. Es kann jedoch auch ungetempert eingesetzt werden, da auch der unbehandelte Schichtaufbau bereits vorteilhafte Eigenschaften hat. Beispielsweise lässt sich bereits bei dem ungetemperten Schichtaufbau bei neutraler Reflektion und Transmission gegenüber herkömmlichen Low-e-Produkten eine vorteilhafte Erhöhung der Transmission auf ≥ 87,5% erkennen. Die normale Emission εₙ liegt bei diesen ungehärteten Produkten dagegen bei etwa 4%.

Nach einem Temperprozess führt das erfindungsgemäße Schichtsystem zu einem farbneutralen Glasprodukt mit einer geringen Emissivität. Die erreichten normalen Emissivitäten liegen dabei in Abhängigkeit von der Wahl der Dicken der Silber- und Entspiegelungsschichten im Bereich von εₙ=2-4%. Gleichzeitig weist das getemperte Schichtsystem eine hohe Transmission von ≥ 88,5% auf. Dabei wird die Herstellung eines farbneutralen Glasproduktes dadurch erleichtert, dass der Farbshift beim Tempern wesentlich reduziert wird. Das Schichtsystem hat ferner den Vorteil, dass ein durchzuführender Temperprozess nicht in Öfen mit sehr engen Parametern erfolgen muss, um ein reproduzierbares Produkt zu erreichen. Die Eigenschaften des Schichtsystems sind vielmehr in einem für die Härtung von Glas relevanten Temperaturbereich weitestgehend konstant, so dass Abweichungen von bestimmten Parametern nicht zu einer gravierenden Qualitätsminderung des Produkts führen. Die Herstellung von getemperten Glasprodukten wird so wesentlich erleichtert.

Ein von einem ZAO-Target abgesputterter Unterblocker wirkt ferner unterhalb der Silberschicht als Keimschicht, die das kristalline Wachstum der Silberschicht fördert, was sich vorteilhaft auf den Herstellungsprozess des Schichtsystems auswirkt.

Die Einbettung der Entspiegelungsschicht aus Titanoxinitrid zwischen der unteren und der inneren Diffusionssperrschicht dient insbesondere dem Schutz der Titanoxinitridschicht beim Tempern. So wird das Titanoxinitrid konserviert und kann beispielsweise nicht in die Silberschicht diffundieren.

Durch den erfindungsgemäßen Schichtaufbau werden somit nicht nur Natriumionen daran gehindert, aus dem Glassubstrat in das Schichtsystem einzudringen, sondern er bewirkt auch eine Konservierung der Titanoxinitridschicht. Erst dadurch kann der hohe Brechungsindex der Titanoxinitridschicht auch nach einem Temperprozess vorteilhaft genutzt werden.

Die Verwendung von Titanoxinitrid in einer Entspiegelungsschicht hat gegenüber herkömmlichen TiO₂-Schichten den wesentlichen Vorteil, dass sie stabiler sind.

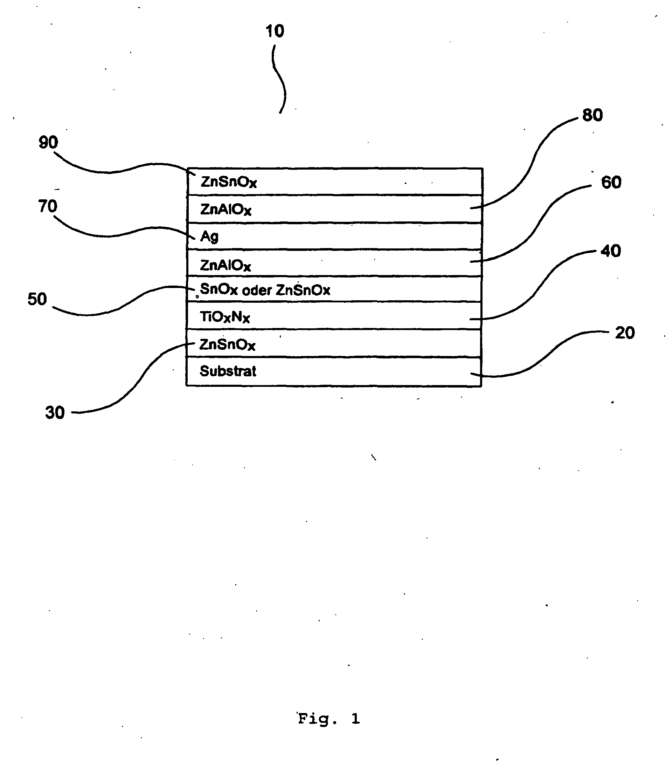

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung in Fig. 1.

Fig. 1 zeigt ein besonders bevorzugtes Ausführungsbeispiel des erfindungsgemäßen Low-e-Schichtsystems 10. Dargestellt ist folgende besonders bevorzugte Schichtfolge auf einem Substrat 20:

| Nr. | Schicht | Schichtdicke |
|---|---|---|
| 30 | ZnSnOₓ | (2-10 nm) |
| 40 | TiOₓNₓ | (10-20 nm) |
| 50 | SnO₂ | (2-10 nm) |
| 60 | ZnAlOₓ | (2-10 nm) |
| 70 | Ag | (5-20 nm) |
| 80 | ZnAlOₓ | (2-10 nm) |
| 90 | ZnSnOₓ | (20-55 nm) |

Das Substrat 20 ist transparent und es handelt sich beispielsweise um eine Scheibe aus Glas oder Kunststoff. Vorzugsweise wird jedoch ein Glassubstrat verwendet, wobei der Begriff Glas hier in einer allgemeinen Bedeutung anzusehen ist und auch glasartige Materialien wie vitrokristalline Stoffe umfasst sind. Das jeweilige Substrat hat typischerweise eine Dicke in der Größenordnung von 1,5-20 mm.

Das erfindungsgemäße Schichtsystem 10 weist wenigstens eine untere Diffusionssperrschicht 30 auf, die vorzugsweise unmittelbar auf das Substrat 20 aufgebracht wird. Es können weitere Funktionsschichten unterhalb dieser Diffusionssperrschicht angeordnet sein, die direkte Aufbringung auf die Substratoberfläche hat sich jedoch als besonders vorteilhaft erwiesen.

Die untere Diffusionssperrschicht 30 besteht erfindungsgemäß aus einem Zinkstannat aus Zink und Zinn mit der Summenformel Zn₂SnO₄. Das Zinkstannat kann dabei ferner mit geringen Mengen Aluminium dotiert sein (Zn₂SnAl₂O₄). Mit einer Diffusionsschicht aus Zinkstannat ohne zusätzliche Dotierung konnten jedoch gute Versuchsergebnisse erzielt werden.

Die untere Diffusionssperrschicht 30 wird vorzugsweise durch reaktives DC-Sputtern von einem Target erzeugt, das aus einer metallischen Legierung, bestehend aus Zink und Zinn gebildet wird. Die Zusammensetzung eines solchen Targets besteht üblicherweise in Gew.-% aus etwa 68% Zink und 32% Zinn. Soll ein dotiertes Zinkstannat aufgebracht werden, werden beispielsweise Targets mit 68% Zink, 30% Zinn und 2% Aluminium verwendet.

Erfindungsgemäß besteht die untere Diffusionssperrschicht 30 jedoch aus einem Zinkstannat mit etwa zu gleichen Teilen Zink und Zinn. Vorzugsweise weist die Schicht in Gew.-% 52% Zink und 48% Zinn auf. Ein Mischungsverhältnis von 52,42 Gew.-% Zink und 47,58 Gew.-% Zinn hat sich dabei als besonders vorteilhaft erwiesen. Bei der Verwendung dieses reinen Zinkstannats haben Versuchsreihen ergeben, dass sich auf der Oberfläche der so gebildeten Schicht weniger Unebenheiten bilden als dies bei der Verwendung von Zinkstannaten mit einem Mischungsverhältnis der Fall ist, bei dem das Zink stärker überwiegt. Diese Unebenheiten, die auf der Oberfläche der Schicht in Form von mehreren kegelförmigen Erhöhungen bzw. Pickeln auftreten, werden durch das in der Schicht enthaltene Zink hervorgerufen. Die mittlere Höhe der Pickel liegt bei etwa 10-20 nm, so dass sich die Erhöhungen bei darauf aufgebrachten weiteren Schichten ebenfalls als Pickel fortsetzen und diese das gesamte Erscheinungsbild des Schichtaufbaus beeinträchtigen. Die Pickel auf den einzelnen Schichten bilden Unreinheiten innerhalb des Schichtsystems und führen zu einer unerwünschten Trübung.

Wird die untere Diffusionssperrschicht 30 dagegen aus einem reinen Zinkstannat in einem Mischungsverhältnis von etwa 52% Zink und 48% Zinn hergestellt, treten keine Pickel auf oder die Höhe der auftretenden Erhöhungen ist vernachlässigbar gering. Es bildet sich somit eine nahezu glatte Oberfläche aus und auch die weiteren Schichten können mit einer entsprechend glatten Oberfläche aufgebracht werden. Das Erscheinungsbild des gesamten Schichtaufbaus ist dadurch klarer als bei der Verwendung von Stannaten mit einem Überschuss an Zink.

Das Schichtsystem 10 weist oberhalb der unteren Diffusionssperrschicht jedoch unterhalb der Silberschicht ferner eine Entspiegelungsschicht 40 auf. Diese Entspiegelungsschicht wird erfindungsgemäß aus Titanoxinitrid gebildet. Der Stickstoffanteil N/(N+O) in der Schicht liegt bei etwa 5-50 Volumenprozent.

Das Titanoxinitrid (Summenformel TiOₓN_{y}) wird beispielsweise durch reaktives DC-Sputtern von einem oder mehreren Titantargets in einer Atmosphäre erzeugt, die neben Argon und Sauerstoff auch Stickstoff enthält. Das Mischungsverhältnis der Komponenten Ar:O₂:N₂ in der Beschichtungsatmosphäre liegt bei etwa 70:20:10. Durch das Einbringen von Stickstoff in die Beschichtungsatmosphäre können nicht nur höhere Beschichtungsraten ermöglicht werden, sondern die entstehende Schicht aus Titanoxinitrid ist auch stabiler als beispielsweise herkömmliche Titandioxidschichten.

Der Brechungsindex der Entspiegelungsschicht 40 liegt in der Größenordnung von 2,3-2,6, vorzugsweise bei 2,5. Durch das hochbrechende Material lassen sich dickere Silberschichten so entspiegeln, dass der a*-Wert im L*a*b*-System negativ ist und somit keine unerwünschte Färbung im positiven a*-Bereich erzeugt wird.

Das erfindungsgemäße Schichtsystem 10 weist unterhalb der Silberschicht eine weitere Diffusionssperrschicht 50 auf, die auch als innere Diffusionssperrschicht bezeichnet wird. Diese innere Diffusionssperrschicht besteht vorzugsweise aus SnO₂. Es kann jedoch auch ZnSnOₓ verwendet werden, wobei mit beiden Schichtmaterialien gute Ergebnisse erzielt wurden.

Das erfindungsgemäße Schichtsystem 10 weist unterhalb der Silberschicht ferner eine Schicht 60 aus ZnAlOₓ auf, die hier auch als Keimschicht bezeichnet wird. Um mit ihren Eigenschaften die Herstellung der Silberschicht zu verbessern, ist die Keimschicht vorzugsweise unmittelbar unter der Silberschicht angeordnet. Die Keimschicht wird beispielsweise keramisch durch DC-Sputtern von einem keramischen Zink-Aluminium-Target (ZAO-Target) aufgebracht.

Über der Keimschicht 60 liegt eine Reflexionsschicht 70 aus einem Edelmetall. Vorzugsweise wird als Edelmetall Silber verwendet. Die Reflexionsschicht 70 wird bei einem Sputterverfahren vorzugsweise in einer inerten Atmosphäre von einem Silbertarget abgesputtert.

Über der Reflexionsschicht 70 ist erfindungsgemäß eine Blockerschicht 80 angeordnet, die wie die Keimschicht 60 aus ZnAlOₓ besteht. Auch diese Schicht wird vorzugsweise keramisch von einem ZAO-Target gesputtert.

Über der Blockerschicht 80 ist wenigstens eine weitere Schicht als Oberschicht 90 angeordnet. Die Oberschicht besteht vorzugsweise wie die untere Diffusionssperrschicht aus einem Zinkstannat mit einem Mischungsverhältnis von Zink zu Zinn von etwa 52/48. Über der Oberschicht 90 können weitere Funktionsschichten wie beispielsweise spezifische Schichten zum Schutz des Schichtaufbaus gegen Umwelteinflüsse ausgebildet sein.

Von der Erfindung umfasst sind ferner Doppelsilbersysteme mit wenigstens zwei Silberschichten. Die Schichtfolge bei einem Doppelsilbersystem ist beispielsweise folgende:
Substrat/ZnSnOₓ/TiOₓNₓ/SnO₂/ZnAlOₓ/Ag/ZnAlOₓ/ZnSnOₓ/ ZnAlOₓ/Ag/ZnAlOₓ/ZnSnOₓ

Der Schichtaufbau zwischen Substrat und der ersten Silberschicht entspricht dem Schichtaufbau beim Einfachsilbersystem. Über der Silberschicht sind ebenfalls ein Blocker aus ZnAlOₓ und eine Oberschicht aus ZnSnOₓ angeordnet. Darauf folgt erneut eine weitere Schicht aus ZnAlOₓ unmittelbar unter der nächsten Silberschicht. Über der zweiten Silberschicht sind erneut ein Blocker aus ZnAlOₓ und eine das Schichtsystem im Wesentlichen abschließende ZnSnOₓ-Schicht vorgesehen.

Zur Aufbringung der einzelnen Schichten des Schichtsystems 10 können verschiedene bekannte Verfahren zur Deposition von Material auf einem Substrat zur Anwendung kommen. Bei den Verfahren handelt es sich beispielsweise um CVD- oder PVD-Verfahren. In einem besonders bevorzugten Ausführungsbeispiel der Erfindung werden die einzelnen Schichten des Aufbaus jedoch durch Sputterverfahren aufgebracht, wobei die Aufbringung von verschiedenen Targets und in unterschiedlichen Atmosphären erfolgen kann. Beispielsweise können metallische oder keramische Targets und reaktive oder inerte Beschichtungsatmosphären zum Einsatz kommen.

Durch den beschriebenen Schichtaufbau auf einem Substrat kann ein Low-e-Schichtsystem zur Verwendung im Glasbau erzeugt werden, das bei einem Temperprozess einen reproduzierbaren Farbshift durchläuft. Der produktionsbedingte Farbshift, der unter anderem durch die Kristallisation des Silbers bewirkt wird, ist so definiert, dass eine neutrale Schicht problemlos eingestellt werden kann.

Es konnte festgestellt werden, dass sich der Flächenwiderstand des Glasproduktes beim Tempern verringerte, während er sich bei bekannten Schichtsystemen typischerweise erhöht. Durch die Verringerung des Flächenwiderstands verringert sich der U-Wert des Glasproduktes ebenfalls, was für die Herstellung von Verglasungseinheiten besonders vorteilhaft ist. Je nach Anwendung lassen sich Emissivitäten von εₙ=2-4% erzielen.

Das erfindungsgemäße Herstellungsverfahren, der damit hergestellte Schichtaufbau und entsprechende temperbare Glasprodukte werden im Folgenden anhand von Ausführungsbeispielen erläutert.

### Beispiel 1

Als Substrat wird eine klar polierte Floatglasscheibe aus Natronkalksilikatglas mit einer Dicke von 8 mm verwendet. Auf die Glasscheibe wird in einer Vakuumkammer von einer DC-Kathode eine 5 nm dicke Zinkstannatschicht abgeschieden. Die verwendete Kathode umfasst ein Target aus einer Zink- und Zinnlegierung, wobei die Zusammensetzung des Targets aus 52,42% Zn und 47,58% Sn besteht. Für den Sputtervorgang wird ein Ar/O₂-Gemisch in die Kammer eingeführt und es stellt sich ein Druck von 2-8 x 10⁻³ mbar ein. Auf diese Zinkstannatschicht wird mit einer Mittelfrequenz-Doppelkathodenanordnung eine 15 nm dicke Titanoxinitridschicht aufgebracht. Dazu wird in der Kammer ein Ar/O_{2/}N₂-Gemisch im Volumenverhältnis von 70/20/10 eingestellt. Daraufhin wird eine Zinnoxidschicht mit einer Dicke von 5 nm aufgebracht und auf diese Schicht wird von einem keramischen Zinkaluminiumtarget eine ZnAlOₓ-Schicht mit einer Dicke von 5 nm abgesputtert. Darauf folgt die Aufbringung einer Silberschicht von einem metallischen Silbertarget in einer inerten Atmosphäre. Die Silberschicht wird mit einer Dicke von 12 nm ausgeführt. Über der Silberschicht wird durch Sputtern von einem keramischen Target eine weitere ZnAlOₓ-Schicht mit einer Dicke von 5 nm abgesputtert. Darüber wird von einem Target aus einer Zink- und Zinnlegierung in einer reaktiven Atmosphäre eine weitere Zinkstannatschicht abgeschieden. Das Target besteht dabei ebenfalls aus 51% Zn und 49% Sn.

Das so hergestellte Glasprodukt wurde in einem ESG-Ofen bei 620° und einer Plateauzeit von 2,4 min getempert. Der Flächenwiderstand R betrug vor dem Tempern 4,54 Ω und sank nach dem Tempern auf 2,94 Ω. Die Trübung betrug nach dem Tempern 0,01%.

### Vergleichsbeispiel 2

Zum Vergleich wurde auf eine Glasscheibe mit einer Dicke von 8 mm in einer Vakuumkammer von einer DC-Kathode eine Al-dotierte Zinkstannatschicht der Dicke 5 nm abgeschieden. Die verwendete Kathode umfasst ein Target aus einer Zink- und Zinnlegierung, wobei die Zusammensetzung des Targets aus 68% Zn, 30% Sn und 2% Al besteht. Für den Sputtervorgang wird ein Ar/O₂-Gemisch in die Kammer eingeführt und es stellt sich ein Druck von 2-8 x 10⁻³ mbar ein. Auf diese Zinkstannatschicht wird mit einer Mittelfrequenz-Doppelkathodenanordnung eine 15 nm dicke Titanoxidschicht aufgebracht. Dazu wird in der Kammer ein Ar/O₂-Gemisch im Volumenverhältnis von 80/20 eingestellt. Auf diese Schicht wird eine weitere Al-dotierte Zinkstannatschicht der Dicke 5 nm abgeschieden, wobei das verwendete Target ebenfalls eine Zusammensetzung von 68% Zn, 30% Sn und 2% Al hat. Auf diese Schicht wird von einem keramischen Zinkaluminiumtarget eine ZnAlOₓ-Schicht mit einer Dicke von 5 nm abgesputtert. Darauf folgt die Aufbringung einer Silberschicht von einem metallischen Silbertarget in einer inerten Atmosphäre. Die Silberschicht wird mit einer Dicke von 12 nm ausgeführt. Darauf folgt eine durch Sputtern von einem keramischen Target aufgebrachte Schicht aus ZnAlOₓ mit einer Dicke von 5 nm. Darüber wird von einem Target aus einer Zink- und Zinnlegierung in einer reaktiven Atmosphäre eine weitere Al-dotierte Zinkstannatschicht abgeschieden. Das Target besteht dabei ebenfalls aus 68% Zn, 30% Sn und 2 % Al.

Das so hergestellte Glasprodukt wurde in einem ESG-Ofen bei 620° und einer Plateauzeit von 2,4 min getempert. Der Flächenwiderstand R betrug vor dem Tempern 3,91 Ω und sank nach dem Tempern auf 2,86 Ω. Die Trübung betrug nach dem Tempern 0,08%.

Die Versuchsergebnisse der beiden Ausführungsbeispiele sind in der nachfolgenden Tabelle 1 dargestellt.

**Tabelle 1**

| Probenbeispiel | Rᵥₒᵣₕₑᵣ [Ω] | R_{nachher} [Ω] | ΔR[Ω] | Trübung [%] |
|---|---|---|---|---|
| 1 | 4,54 | 2,94 | -1,60 | 0,01 |
| 2 | 3,91 | 2,86 | -1,05 | 0,08 |

Der Vergleich der beiden Ausführungsbeispiele verdeutlicht, dass das Probenbeispiel 1, das dem erfindungsgemäßen Schichtaufbau entspricht, nach dem Tempern eine geringere Trübung aufweist als das Probenbeispiel 2, bei dem zwei Titanoxidschichten und Zinkstannatschichten mit vergleichsweise mehr Zink verwendet wurden. Die Verwendung eines Zinkstannats für eine untere Diffusionssperrschicht unmittelbar auf dem Glassubstrat, wobei das Verhältnis von Zink zu Zinn etwa 50/50 ist, reduziert somit die Trübung des unbehandelten und des getemperten Glasproduktes gegenüber der Verwendung eines Zinkstannats mit einem erhöhten Zinkanteil. Es konnte dabei festgestellt werden, dass beim ersten Ausführungsbeispiel weniger bis gar keine pickelartigen Erhöhungen auf der Oberfläche der unteren Diffusionssperrschicht auftraten. Dies liegt an dem geringeren Anteil an Zink, der üblicherweise die Pickelbildung hervorruft. Dabei ist die Verwendung eines Aldotierten Zinkstannats nicht erforderlich, sondern auch undotierte Zinkstannate führen zu sehr guten Versuchsergebnissen.

Ferner wird der Flächenwiderstand R bei beiden Probenbeispielen durch das Tempern reduziert. Wird der Flächenwiderstand als Maß für die Güte des zu produzierenden Glasproduktes genommen, bedeutet seine Absenkung somit eine Verbesserung des Glasproduktes. Dabei ist der absolute Wert des Flächenwiderstands nach dem Tempern beim Probenbeispiel 1 geringer als beim Beispiel 2. Das erste Glasprodukt mit dem erfindungsgemäßen Schichtaufbau ist somit als qualitativ höher anzusehen.

Es konnte ferner festgestellt werden, dass die Verwendung von Titanoxinitrid anstelle von herkömmlichem Titanoxid für die Herstellung einer Entspiegelungsschicht ebenfalls Vorteile mit sich bringt. Durch den Zusatz von Stickstoff in der Beschichtungsatmosphäre können nicht nur höhere Beschichtungsraten erreicht werden, sondern das eutektisch vorteilhaftere Titanoxinitrid verbessert ferner die Eigenschaften des Schichtaufbaus.

In der folgenden Tabelle 2 werden für beide Ausführungsbeispiele die jeweiligen Veränderungen der Werte L, a und b im L*a*b*-System und der durch das Tempern verursachte Farbshift ΔE verglichen.

**Tabelle 2**

| Probenbeispiel | ΔL | Δa | Δb | ΔEₜₑₘₚ |
|---|---|---|---|---|
| 1 | 3,39 | 0,92 | -2,67 | 4,42 |
| 2 | 2,02 | 5,73 | 1,27 | 6,21 |

Die Werte der Tabelle 2 verdeutlichen, dass das Probenbeispiel 1 mit dem erfindungsgemäßen Schichtaufbau vorteilhaftere Einzelwerte der Parameter des L*a*b*-Systems mit sich bringt und der Farbshift ΔEₜₑₘₚ durch das Tempern geringer ist als bei dem bekannten Schichtsystem des Probenbeispiels 2.

Das erfindungsgemäße Low-e-Schichtsystem auf einem Substrat weist somit in einem für das Härten von Glas relevanten Temperaturbereich eine hohe Konstanz bezüglich seiner Eigenschaften auf. Damit wird erreicht, dass auch bei unterschiedlichen Ofenparametern reproduzierbare Schichteigenschaften erzielt werden können. Dies hat insbesondere den Vorteil, dass das Basisprodukt aufgrund des geringen Farbshifts als Standardprodukt und als temperbares Produkt verwendet werden kann.

Bezugszeichenliste:
- 10: Low-e-Schichtsystem
- 20: Substrat, Glasscheibe
- 30: Untere Diffusionssperrschicht, ZnSnOₓ-Schicht
- 40: Entspiegelungsschicht, Titanoxinitridschicht
- 50: Innere Diffusionssperrschicht, SnO₂ oder ZnSnOₓ
- 60: Keimschicht, ZnAlOₓ-Schicht
- 70: Reflexionsschicht, Silberschicht
- 80: Blockerschicht, ZnAlOₓ-Schicht
- 90: Oberschicht, ZnSnOₓ-Schicht

## Patentansprüche

1. Temperbares Low-e-Schichtsystem (10), das auf ein transparentes Substrat (20) aufbringbar ist, das wenigstens eine Reflexionsschicht (70) im IR-Bereich aufweist,
**dadurch gekennzeichnet,**
**dass** ausgehend vom Substrat wenigstens folgende Schichten auf dem Substrat (20) angeordnet sind:
(a) Untere Diffusionssperrschicht (30) aus ZnSnOₓ;
(b) Entspiegelungsschicht (40) aus Titanoxinitrid;
(c) Innere Diffusionssperrschicht (50) aus SnO₂ oder ZnSnOₓ;
(d) Keimschicht (60) aus ZnAlOₓ;
(e) Reflexionsschicht (70) im IR-Bereich;
(f) Blockerschicht (80) aus ZnAlOₓ; und
(g) Oberschicht (90) aus ZnSnOₓ,
wobei die Diffusionssperrschicht (30) und die Oberschicht (90) aus einem Zinkstannat bestehen, in dem Zink und Zinn jeweils in Anteilen enthalten sind, die in der Größenordnung von 47-53 Gew.-% liegen.

2. Temperbares Schichtsystem nach Anspruch 1,
**dadurch gekennzeichnet,**
**dass** die Reflexionsschicht (70) aus Silber besteht.

3. Temperbares Schichtsystem nach einem oder beiden der Ansprüche 1 und 2,
**dadurch gekennzeichnet,**
**dass** die Diffusionssperrschicht (30) und die Oberschicht (90) aus einem Zinkstannat bestehen, in dem etwa 53 Gew.-% Zink und 47 Gew.-% Zinn, insbesondere 52,42 Gew.-% Zink und 47,58 Gew.-% Zinn enthalten sind.

4. Temperbares Schichtsystem nach einem oder mehreren der Ansprüche 1 bis 3,
**dadurch gekennzeichnet,**
**dass**
- die Dicke der unteren Diffusionssperrschicht (30) in der Größenordnung von 2-10 nm, vorzugsweise bei 5 nm;
- die Dicke der Entspiegelungsschicht (40) in der Größenordnung von 10-20 nm, vorzugsweise bei 15 nm;
- die Dicke der inneren Diffusionssperrschicht (50) in der Größenordnung von 2-10 nm, vorzugsweise bei 5 nm;
- die Dicke der Keimschicht (60) in der Größenordnung von 2-10 nm, vorzugsweise bei 5 nm;
- die Dicke der Reflexionsschicht (70) in der Größenordnung von 5-20 nm, vorzugsweise bei 12 nm;
- die Dicke der Blockerschicht (80) in der Größenordnung von 2-10 nm, vorzugsweise bei 5 nm; und
- die Dicke der Oberschicht (90) in der Größenordnung von 20-55 nm, vorzugsweise bei 35 nm liegt.

5. Verfahren zur Herstellung eines temperbaren Low-e-Schichtsystems (10) auf einem transparenten Substrat (20),
**gekennzeichnet**
**durch** wenigstens folgende Schritte:
- Bereitstellen eines Substrats (20);
- Aufbringen einer unteren Diffusionssperrschicht (30) aus ZnSnOₓ, wobei die Diffusionssperrschicht aus einem Zinkstannat besteht, in dem Zink und Zinn jeweils in Anteilen enthalten sind, die in der Größenordnung von 47-53 Gew.-% liegen;
- Aufbringen einer Entspiegelungsschicht (40) aus Titanoxinitrid;
- Aufbringen einer inneren Diffusionssperrschicht (50) aus SnO₂ oder ZnSnOₓ;
- Aufbringen einer Keimschicht (60) aus ZnAlOₓ;
- Aufbringen einer Reflexionsschicht (70) im IR- Bereich;
- Aufbringen einer Blockerschicht (80) aus ZnAlOₓ; und
- Aufbringen einer Oberschicht (90) aus ZnSnOₓ, wobei die Oberschicht aus einem Zinkstannat besteht, in dem Zink und Zinn jeweils in Anteilen enthalten sind, die in der Größenordnung von 47-53 Gew.-% liegen.

6. Verfahren nach Anspruch 5,
**dadurch gekennzeichnet,**
**dass** die Reflexionsschicht (70) im IR-Bereich aus Silber besteht.

7. Verfahren nach einem oder beiden der Ansprüche 5 und 6,
**dadurch gekennzeichnet,**
**dass** die Entspiegelungsschicht (40) durch reaktives Sputtern von einem oder mehreren Titantargets in einer Beschichtungsatmosphäre aus einem Gasgemisch aus Argon, Sauerstoff und Stickstoff erzeugt wird, wobei das Mischungsverhältnis von Ar:O₂:N₂ in der Beschichtungsatmosphäre bei etwa 70:20:10 liegt.

8. Verfahren nach einem oder mehreren der Ansprüche 5 bis 7,
**dadurch gekennzeichnet ,**
**dass** die untere Diffusionssperrschicht (30) und die Oberschicht (90) durch reaktives Sputtern von einem oder mehreren Zinn- und Zinnlegierungstargets erzeugt wird, wobei die Anteile von Zink und Zinn im Target jeweils in der Größenordnung von 47-53 Gew.-% liegen.

9. Verfahren nach Anspruch 8,
**dadurch gekennzeichnet,**
**dass** das verwendete Target etwa 53 Gew.-% Zink und 47 Gew.-% Zinn, insbesondere 52,42 Gew.-% Zink und 47,58 Gew.-% Zinn enthält.

10. Verfahren nach einem oder mehreren der Ansprüche 5 bis 9,
**dadurch gekennzeichnet ,**
**dass** die Keimschicht (60) und die Blockerschicht (80) durch keramisches Sputtern von einem keramischen Zink-Aluminium-Target (ZAO-Target) erzeugt werden.

11. Verfahren nach einem oder mehreren der Ansprüche 5 bis 10,
**dadurch gekennzeichnet,**
**dass**
- die untere Diffusionssperrschicht (30) mit einer Dicke in der Größenordnung von 2-10 nm, vorzugsweise mit 5 nm;
- die Entspiegelungsschicht (40) mit einer Dicke in der Größenordnung von 10-20 nm, vorzugsweise mit 15 nm;
- die innere Diffusionssperrschicht (50) mit einer Dicke in der Größenordnung von 2-10 nm, vorzugsweise mit 5 nm;
- die Keimschicht (60) mit einer Dicke in der Größenordnung von 2-10 nm, vorzugsweise mit 5 nm;
- die Reflexionsschicht (70) mit einer Dicke in der Größenordnung von 5-20 nm, vorzugsweise mit 12 nm;
- die Blockerschicht (80) mit einer Dicke in der Größenordnung von 2-10 nm, vorzugsweise mit 5 nm; und
- die Oberschicht (90) mit einer Dicke in der Größenordnung von 20-55 nm, vorzugsweise mit 35 nm
aufgebracht wird.

12. Low-e-Glasprodukt mit einem Schichtsystem (10) auf einem transparenten Substrat (20), wobei das Schichtsystem wenigstens eine Reflexionsschicht (70) im IR-Bereich aufweist,
**dadurch gekennzeichnet,**
**dass** ausgehend vom Substrat wenigstens folgende Schichten auf dem Substrat (20) angeordnet sind:
(a) Untere Diffusionssperrschicht (30) aus ZnSnOₓ;
(b) Entspiegelungsschicht (40) aus Titanoxinitrid;
(c) Innere Diffusionssperrschicht (50) aus SnO₂ oder ZnSnOₓ;
(d) Keimschicht (60) aus ZnAlOₓ;
(e) Reflexionsschicht (70) im IR-Bereich:
(f) Blockerschicht (80) aus ZnAlOₓ; und
(g) Oberschicht (90) aus ZnSnOₓ,
wobei die Diffusionssperrschicht (30) und die Oberschicht (90) aus einem Zinkstannat bestehen, in dem Zink und Zinn jeweils in Anteilen enthalten sind, die in der Größenordnung von 47-53 Gew.-% liegen.

13. Low-e-Glasprodukt nach Anspruch 12, **dadurch gekennzeichnet ,**
**dass** das Schichtsystem (10) nach einem oder mehreren der Ansprüche 2-4 ausgeführt ist.

14. Low-e-Glasprodukt nach einem oder beiden der Ansprüche 12 und 13,
**dadurch gekennzeichnet,**
**dass** das Schichtsystem getempert wurde.

## Claims

1. Temperable low-e layer system (10) that can be applied onto a transparent substrate (20) having at least one layer (70) that is reflective in the IR spectrum,
**characterized in that**,
starting from the substrate, at least the following layers are arranged on the substrate (20):
(a) a bottom diffusion barrier layer (30) made of ZnSnOₓ;
(b) an antireflective layer (40) made of titanium oxynitride;
(c) an inner diffusion barrier layer (50) made of SnO₂ or ZnSnOₓ;
(d) a seed layer (60) made of ZnAlOₓ;
(e) a layer (70) that is reflective in the IR spectrum;
(f) a blocking layer (80) made of ZnAlOₓ; and
(g) a top layer (90) made of ZnSnOₓ,
whereby the diffusion barrier layer (30) and the top layer (90) are made of a zinc stannate containing zinc and tin at proportions in the order of magnitude of 47% by weight to 53% by weight.

2. The temperable layer system according to Claim 1,
**characterized in that**
the reflective layer (70) is made of silver.

3. The temperable layer system according to one or both of Claims 1 and 2,
**characterized in that**
the diffusion barrier layer (30) and the top layer (90) are made of a zinc stannate containing about 53% by weight of zinc and 47% by weight of tin, especially 52.42% by weight of zinc and 47.58% by weight of tin.

4. The temperable layer system according to one or more of Claims 1 to 3,
**characterized in that**
• the thickness of the bottom diffusion barrier layer (30) is in the order of magnitude of 2 nm to 10 nm, preferably 5 nm;
• the thickness of the antireflective layer (40) is in the order of magnitude of 10 nm to 20 nm, preferably 15 nm;
• the thickness of the inner diffusion barrier layer (50) is in the order of magnitude of 2 nm to 10 nm, preferably 5 nm;
• the thickness of the seed layer (60) is in the order of magnitude of 2 nm to 10 nm, preferably 5 nm;
• the thickness of the reflective layer (70) is in the order of magnitude of 5 nm to 20 nm, preferably 12 nm;
• the thickness of the blocking layer (80) is in the order of magnitude of 2 nm to 10 nm, preferably 5 nm; and
• the thickness of the top layer (90) is in the order of magnitude of 20 nm to 55 nm, preferably 35 nm.

5. A method for the production of a temperable low-e layer system (10) on a transparent substrate (20),
**characterized by**
at least the following steps:
• provision of a substrate (20);
• application of a bottom diffusion barrier layer (30) made of ZnSOₓ, whereby the diffusion barrier layer is made of a zinc stannate containing zinc and tin at proportions in the order of magnitude of 47% by weight to 53% by weight;
• application of an antireflective layer (40) made of titanium oxynitride;
• application of an inner diffusion barrier layer (50) made of SnO₂ or ZnSnOₓ;
• application of a seed layer (60) made of ZnAlOₓ;
• application of a layer (70) that is reflective in the IR spectrum
• application of a blocking layer (80) made of ZnAlOₓ; and
• application of a top layer (90) made of ZnSnOₓ, whereby the top layer is made of a zinc stannate containing zinc and tin at proportions in the order of magnitude of 47% by weight to 53% by weight.

6. The method according to Claim 5
**characterized in that**
the layer (70) that is reflective in the IR spectrum is made of silver.

7. The method according to one or both of Claims 5 and 6,
**characterized in that**
the antireflective layer (40) is produced by reactive sputtering of one or more titanium targets in a coating atmosphere consisting of a gas mixture of argon, oxygen and nitrogen, whereby the mixing ratio of Ar : O₂ : N₂ in the coating atmosphere is about 70 : 20 : 10.

8. The method according to one or more of Claims 5 to 7,
**characterized in that**
the bottom diffusion barrier layer (30) and the top layer (90) are produced by reactive sputtering of one or more tin and tin alloy targets, whereby the proportions of zinc and tin in the target are in the order of magnitude of 47% by weight to 53% by weight.

9. The method according to Claim 8,
**characterized in that**
the employed target contains about 53% by weight of zinc and 47% by weight of tin, especially 52.42% by weight of zinc and 47.58% by weight of tin.

10. The method according to one or more of Claims 5 to 9,
**characterized in that**
the seed layer (60) and the blocking layer (80) are produced by ceramic sputtering of a ceramic zinc-aluminum target (ZAO target).

11. The method according to one or more of Claims 5 to 10,
**characterized in that**
• the bottom diffusion barrier layer (30) is applied at a thickness in the order of magnitude of 2 nm to 10 nm, preferably 5 nm;
• the antireflective layer (40) is applied at a thickness in the order of magnitude of 10 nm to 20 nm, preferably 15 nm;
• the inner diffusion barrier layer (50) is applied at a thickness in the order of magnitude of 2 nm to 10 nm, preferably 5 nm;
• the seed layer (60) is applied at a thickness in the order of magnitude of 2 nm to 10 nm, preferably 5 nm;
• the reflective layer (70) is applied at a thickness in the order of magnitude of 5 nm to 20 nm, preferably 12 nm;
• the blocking layer (80) is applied at a thickness in the order of magnitude of 2 nm to 10 nm, preferably 5 nm; and
• the top layer (90) is applied at a thickness in the order of magnitude of 20 nm to 55 nm, preferably 35 nm.

12. A low-e glass product with a layer system (10) on a transparent substrate (20), whereby the layer system has at least one layer (70) that is reflective in the IR spectrum,
**characterized in that**,
starting from the substrate, at least the following layers are arranged on the substrate (20):
(a) a bottom diffusion barrier layer (30) made of ZnSnOₓ;
(b) an antireflective layer (40) made of titanium oxynitride;
(c) an inner diffusion barrier layer (50) made of SnO₂ or ZnSnOₓ;
(d) seed layer (60) made of ZnAlOₓ;
(e) a layer (70) that is reflective in the IR spectrum;
(f) a blocking layer (80) made of ZnAlOₓ; and
(g) a top layer (90) made of ZnSnOₓ,
whereby the diffusion barrier layer (30) and the top layer (90) are made of a zinc stannate containing zinc and tin at proportions in the order of magnitude of 47% by weight to 53% by weight.

13. The low-e glass product according to Claim 12,
**characterized in that**
the layer system is made according to one or more of Claims 2 to 4.

14. The low-e glass product according to one or both of Claims 12 and 13,
**characterized in that**
the layer system was tempered.

## Revendications

1. Système de couches à basse émissivité trempable (10) pouvant être posé sur un substrat transparent (20), présentant au moins une couche (70) réflectrice dans la plage IR, **caractérisé en ce que**, en partant du substrat, au moins les couches suivantes sont disposées sur le substrat (20) :
(a) une couche antidiffusion inférieure (30) en ZnSnOₓ,
(b) une couche antireflet (40) en oxynitrure de titane,
(c) une couche antidiffusion intérieure (50) en SnO₂ ou en ZnSnOₓ,
(d) une couche germinative (60) en ZnAlOₓ,
(e) une couche (70) réflectrice dans la plage IR,
(f) une couche bloquante (80) en ZnAlOₓ et
(g) une couche supérieure (90) en ZnSnOₓ,
la couche antidiffusion (30) et la couche supérieure (90) étant composées d'un stannate de zinc dans lequel le zinc et l'étain sont respectivement contenus à raison de fractions de l'ordre de 47 à 53 % en poids.

2. Système de couches trempable selon la revendication 1, **caractérisé en ce que** la couche réflectrice (70) est composée d'argent.

3. Système de couches trempable selon l'une ou les deux revendications 1 et 2, **caractérisé en ce que** la couche antidiffusion (30) et la couche supérieure (90) sont composées d'un stannate de zinc contenant environ 53 % en poids de zinc et 47 % en poids d'étain, et plus particulièrement 52,42 % en poids de zinc et 47,58 % en poids d'étain.

4. Système de couches trempable selon l'une ou plusieurs des revendications 1 à 3, **caractérisé en ce que**
- l'épaisseur de la couche antidiffusion inférieure (30) est de l'ordre de 2 à 10 nm et est de préférence de 5 nm ;
- l'épaisseur de la couche antireflet (40) est de l'ordre de 10 à 20 nm et est de préférence de 15 nm ;
- l'épaisseur de la couche antidiffusion intérieure (50) est de l'ordre de 2 à 10 nm et est de préférence de 5 nm ;
- l'épaisseur de la couche germinative (60) est de l'ordre de 2 à 10 nm et est de préférence de 5 nm ;
- l'épaisseur de la couche réflectrice (70) est de l'ordre de 5 à 20 nm et est de préférence de 12 nm ;
- l'épaisseur de la couche bloquante (80) est de l'ordre de 2 à 10 nm et est de préférence de 5 nm et
- l'épaisseur de la couche supérieure (90) est de l'ordre de 20 à 55 nm et est de préférence de 35 nm.

5. Procédé de fabrication d'un système de couches à basse émissivité trempable (10) sur un substrat transparent (20), **caractérisé par** au moins les étapes suivantes :
- mise à disposition d'un substrat (20),
- application d'une couche antidiffusion inférieure (30) en ZnSnOₓ, la couche antidiffusion étant composée d'un stannate de zinc dans lequel le zinc et l'étain sont respectivement contenus à raison de fractions de l'ordre de 47 à 53 % en poids,
- application d'une couche antireflet (40) en oxynitrure de titane,
- application d'une couche antidiffusion intérieure (50) en SnO₂ ou en ZnSnOₓ,
- application d'une couche germinative (60) en ZnAlOₓ,
- application d'une couche (70) réflectrice dans la plage IR,
- application d'une couche bloquante (80) en ZnAlOₓ et
- application d'une couche supérieure (90) en ZnSnOₓ,
- la couche supérieure étant composée d'un stannate de zinc dans lequel le zinc et l'étain sont respectivement contenus à raison de fractions de l'ordre de 47 à 53 % en poids.

6. Procédé selon la revendication 5, **caractérisé en ce que** la couche (70) réflectrice dans la plage IR est composée d'argent.

7. Procédé selon l'une ou les deux revendications 5 et 6, **caractérisé en ce que** la couche antireflet (40) est formée par pulvérisation réactive à partir d'une ou de plusieurs cibles de titane sous une atmosphère de revêtement composée d'un mélange gazeux d'argon, d'oxygène et d'azote, le rapport de mélange Ar:O₂:N₂ dans l'atmosphère de revêtement étant d'environ 70:20:10.

8. Procédé selon l'une ou plusieurs des revendications 5 à 7, **caractérisé en ce que** la couche antidiffusion inférieure (30) et la couche supérieure (90) sont formées par pulvérisation réactive à partir d'une ou de plusieurs cibles d'étain ou d'alliage d'étain, les fractions de zinc et d'étain dans la cible étant respectivement de l'ordre de 47 à 53 % en poids.

9. Procédé selon la revendication 8, **caractérisé en ce que** la cible utilisée contient environ 53 % en poids de zinc et 47 % en poids d'étain, et plus particulièrement 52,42 % en poids de zinc et 47,58 % en poids d'étain.

10. Procédé selon l'une ou plusieurs des revendications 5 à 9, **caractérisé en ce que** la couche germinative (60) et la couche bloquante (80) sont formées par pulvérisation céramique à partir d'une cible céramique de zinc et d'aluminium (cible ZAO).

11. Procédé selon l'une ou plusieurs des revendications 5 à 10, **caractérisé en ce que**
- la couche antidiffusion inférieure (30) est appliquée avec une épaisseur de l'ordre de 2 à 10 nm et de préférence de 5 nm ;
- la couche antireflet (40) est appliquée avec une épaisseur de l'ordre de 10 à 20 nm et de préférence de 15 nm ;
- la couche antidiffusion intérieure (50) est appliquée avec une épaisseur de l'ordre de 2 à 10 nm et de préférence de 5 nm ;
- la couche germinative (60) est appliquée avec une épaisseur de l'ordre de 2 à 10 nm et de préférence de 5 nm ;
- la couche réflectrice (70) est appliquée avec une épaisseur de l'ordre de 5 à 20 nm et de préférence de 12 nm ;
- la couche bloquante (80) est appliquée avec une épaisseur de l'ordre de 2 à 10 nm et de préférence de 5 nm, et
- la couche supérieure (90) est appliquée avec une épaisseur de l'ordre de 20 à 55 nm et de préférence de 35 nm.

12. Produit en verre à basse émissivité comportant un système de couches (10) sur un substrat transparent (20), le système de couches présentant au moins une couche (70) réflectrice dans la plage IR, **caractérisé en ce que**, en partant du substrat, au moins les couches suivantes sont disposées sur le substrat (20) :
(a) une couche antidiffusion inférieure (30) en ZnSnOₓ,
(b) une couche antireflet (40) en oxynitrure de titane,
(c) une couche antidiffusion intérieure (50) en SnO₂ ou en ZnSnOₓ,
(d) une couche germinative (60) en ZnAlOₓ,
(e) une couche (70) réflectrice dans la plage IR,
(f) une couche bloquante (80) en ZnAlOₓ et
(g) une couche supérieure (90) en ZnSnOₓ,
la couche antidiffusion (30) et la couche supérieure (90) étant composées d'un stannate de zinc dans lequel le zinc et l'étain sont respectivement contenus à raison de fractions de l'ordre de 47 à 53 % en poids.

13. Produit en verre à basse émissivité selon la revendication 12, **caractérisé en ce que** le système de couches (10) est réalisé selon l'une ou plusieurs des revendications 2 à 4.

14. Produit en verre à basse émissivité selon l'une ou les deux revendications 12 et 13, **caractérisé en ce que** le système de couches a subi un trempage.
